**Europäisches Patentamt**

**European Patent Office**

**Office européen des brevets**

(19)

(11) Publication number: **0 182 515**
**A2**

## (12) EUROPEAN PATENT APPLICATION

(21) Application number: **85307681.8**

(22) Date of filing: **24.10.85**

(51) Int. Cl.⁴: **G 05 B 19/21**

(30) Priority: **19.11.84 US 672923**

(43) Date of publication of application: **28.05.86**
**Bulletin 86/22**

(84) Designated Contracting States: **AT BE CH DE FR GB IT
LI LU NL SE**

(71) Applicant: **Gergek, Franc, 1905-2600 Don Mills Road,
Willowdale Ontario, M2J 3B4 (CA)**

(72) Inventor: **Gergek, Franc, 1905-2600 Don Mills Road,
Willowdale Ontario, M2J 3B4 (CA)**

(74) Representative: **Smith, Norman Ian et al, F.J.
CLEVELAND & COMPANY 40-43 Chancery Lane,
London WC2A 1JQ (GB)**

(54) **Control mechanism for paper cutting machines.**

(57) A control mechanism for paper cutting machines is de-
scriped. There is a microprocessor control (A) adapted for con-
nection to a photoelectric means within an encoder (B) mount-
ed on a lead screw (C) to signal the position of a backgauge. A
display and keyboard (D) are connected to the microprocessor.
The display has digital numbers (20) representing the position
of the backgauge in different measurement systems and three
indicators (29, 31, 33), one showing a request to move for-
ward, the second showing a request to move in reverse and a
third showing arrival of the backgauge at the cutting position.
The indicator has visual means to show the approach of the
backgauge to the cutting position. The keyboard has three
keys (26, 28, 27) one is to change the measurement system,
the other two are for recording the desired position of the back-
gauge and the memory of the microprocessor control.

- 1 -

## CONTROL MECHANISM FOR PAPER CUTTING MACHINES

This invention relates to a control mechanism for paper cutting machines.

Paper cutting machines of the type to which the invention relates are illustrated by US Patent 4 331 050, Gergek, May 25 1982, the disclosure of which is hereby incorporated by reference.

The control mechanism used on a machine of the type disclosed in the patent is generally fairly expensive. This mechanism is therefore not suitable for use on small cutters or where the extent to which the cutter is used does not warrant an expensive control installation.

Having regard to the foregoing, the applicant has devised a simplified apparatus. This apparatus includes a microprocessor control which is adapted for connection to photoeletric means within an encoder mounted on a lead screw to a signal the position of a backgauge. A display and simple associated keyboard is connected to the microprocessor. The display has digital numbers representing the position of the backgauge in different modes (ie. measurement systems, metric or imperial measure). The display also has three

- 2 -

indicators.  One shows a request to move forward.  The second shows a request to move in reverse.  The third shows arrival at the cutting position.  The reverse and forward indicator are both adapted to signal the approach of the backgauge to the cutting position.

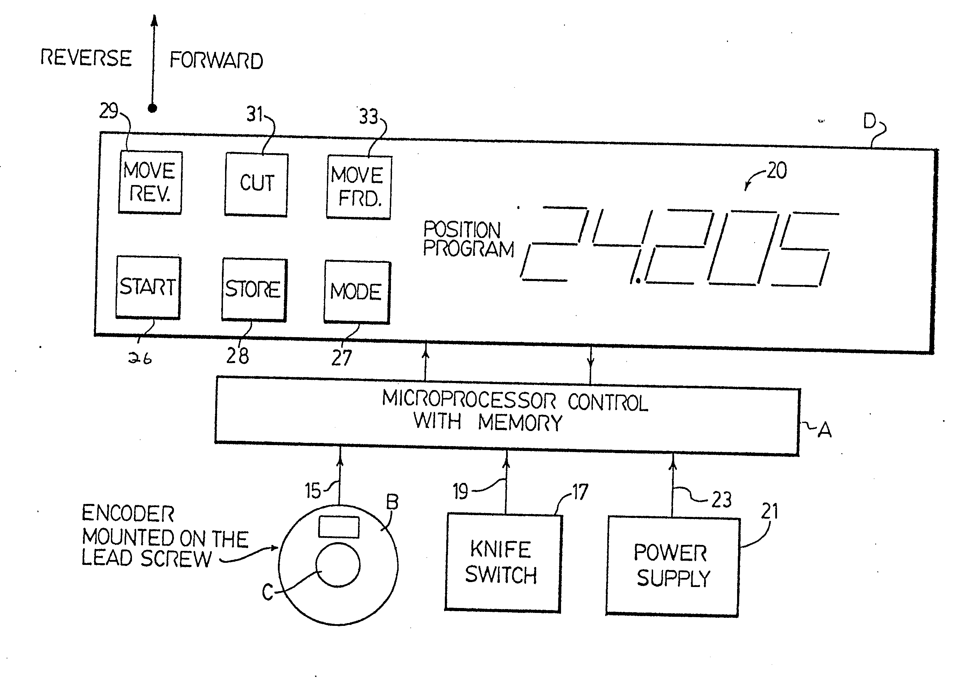

The present invention will now be described with reference to the accompanying drawing, which is a block diagram of a preferred unit according to the invention.

Referring more particularly to the drawing, A represents a microprocessor, connected through a cable 15 to a photoelectric sensing means on an encoder B.  The encoder B is mounted on a lead screw C which carries a backgauge and causes it to move back and forth depending on the direction of rotation of the screw.  The microprocessor is also connected to a knife switch 17 through a cable 19 and to a power supply 21 through a cable 23.  The microprocessor is also connected to a display D with keyboard.

The display D has digital numbers 20 showing the position of the backgauge.  The keyboard has push buttons 26, 28 and 27 denoting start, store and mode (type of units of measurement).  The display also includes lights 29, 31 and 33 showing a request to move forward, in reverese, and to cut.

- 3 -

The operation of the apparatus is as follows.

First the operator selects the mode, that is the units of measurement between metric and imperial measures by pressing key 27. Then, he presses the start and store buttons 24 and 25 simultaneously. Pushing the start and store buttons in this way erases any previous program and prepares the unit for recording a new program.

Then, the operator moves the backgauge to its first cutting position, makes a cut, then moves to a second position, makes a cut, and so on to the end of the cutting sequence. In this way a program is created for later use which is retained by the memory.

Then, the operator presses start. This brings the move forward and move reverse lights into play. The lighting of the lights 33 and 29 tell the operator in which direction the backgauge has to be moved to the next cutting position.

Supposing the light 29 lights signalling to move in reverse, the operator moves the apparatus in reverse, and, when the backgauge nears the cutting position, the move reverse lights 29 flash and the intensity of the flashing increases until the backgauge reaches the cutting position, when the cut light comes on.

The same logic applies where the signal is to move the backgauge forward.

There are alternative ways of setting up the display in the keyboard to that shown in the drawing. For example, a needle on a dial can be used to show movement forward or reverse to a central cut position.

Another way is to have a series of lights at each side of a zero line indicating the cut position, the lights to one side indicating forward and to the other side indicating reverse. As the backgauge moves towards the cut position in either direction, the lights go out one by one or vice-versa until the position is found.

A third way of signalling the position of the backgauge is a tone indication which can vary as the backgauge is approaching the cut position.

The microprocessor control referred to incorporates a microprocessor chip, memory chips and circuitry as well understood by one skilled in the art. The microprocessor is connected, on the one hand, to the display with keyboard D and, on the other, to the photoelectric signalling means on the encoder B, the knife switch 17 and the power supply 21.

- 5 -

The apparatus can either be one in which the lead screw is rotated by manual means or is power operated.

0182515

CLAIMS

1.      A control mechanism for paper cutting machines, comprising,

a microprocessor control (A) adapted for connection to photoelectric means in an encoder (B) mounted on a lead screw (C) to signal the position of a backgauge,

a display and keyboard (D) connected to the microprocessor,

the display having digital numbers (20) representing the position of the backgauge in different measurement systems and indicators (29, 31, 33) to show request to move forward, request to move in reverse, and arrival of the backgauge at the cutting position respectively,

the keyboard having a key (27) to change the measurement system and two other keys (26, 28) for recording the desired positions of the backgauge in the memory of the microprocessor control.

2.      A control mechanism, as claimed in claim 1 wherein the signals showing the request for moving forward and in reverse and the cutting position are lights.

3.      A control mechanism, as claimed in claim 2, wherein there is means connected to the said lights to cause them to flicker when the backgauge approaches the cutting position.

4.      A control mechanism, as claimed in claim 1 wherein the request to move forward and in reverse is a series of lights and means for turning off the lights in series as the backgauge approaches the cutting position.

5.      A control mechanism, as claimed in any preceding claim wherein there is audible means for signalling by tone variation the approach of the backgauge to the cutting position.

REVERSE | FORWARD

MOVE REV. (29)  CUT (31)  MOVE FRD. (33)

START (26)  STORE (28)  MODE (27)

POSITION PROGRAM  24.205 (20)

D

MICROPROCESSOR CONTROL WITH MEMORY  A

ENCODER MOUNTED ON THE LEAD SCREW  15  B  C

KNIFE SWITCH  19  17

POWER SUPPLY  23  21

0182515

1/1